# EUROPÄISCHE PATENTANMELDUNG

(11) **EP 1 865 033 A2**
(43) Veröffentlichungstag der Anmeldung: **12.12.2007**
(21) Anmeldenummer: 07010437.7
(22) Anmeldetag: 25.05.2007
(51) Int. Cl.: C09D 7/00, C02F 1/52

(54) **Stabile, hochkonzentrierte Aluminiumcarboxylat-Lösungen**

(30) Priorität: 06.06.2006 DE 102006026573
(71) Anmelder: Henkel Kommanditgesellschaft auf Aktien, 40589 Düsseldorf (DE)
(72) Erfinder: Senner, Marcus, 41564 Kaarst (DE)

(57) **Zusammenfassung**

Gegenstand der Erfindung ist eine wässrige Lösung eines Aluminiumcarboxylat-Salzes, die mindestens 1,6 Gew.-% Aluminium enthält, dadurch gekennzeichnet, dass als Carboxylat-Anion das Anion einer Hydroxymonocarbonsäure und bevorzugt Lactat vorliegt und die Lösung pro Mol Aluminium mindestens zwei Äquivalente Hydroxymonocarbonsäure enthält, sowie deren Herstellung und deren Verwendung bevorzugt als Koagulationsmittel für Lacke.

## Beschreibung

Die vorliegende Erfindung betrifft konzentrierte, stabile wässrige Aluminiumcarboxylat-Lösungen mit einem Aluminiumanteil von mindestens 1,6 Gew.-% erhältlich durch Umsetzung von Hydroxymonocarbonsäuren mit basisch reagierenden Aluminiumsalzen, bevorzugt Natriumaluminat, deren Herstellung sowie deren Verwendung als Koagulationsmittel in partikulär-dispersen Systemen, insbesondere zur Lackkoagulierung, oder zum imprägnieren von Textilien, in Desinfektions- und Reinigungsmitteln und als Fixierhilfsmittel in der Lederbearbeitung.

Aus dem Stand der Technik ist die Bildung von Aluminiumcarbonsäuresalzen bekannt. In der DE 2325018 ist die Bildung von polymeren Aluminiumcarbonsäuresalzen gemäß einer stöchiometrischen Umsetzung eines Carbonsäure/-Wassergemisches mit elementarem Aluminium beschrieben. Prinzipiell sind dadurch gelartige, klare und partiell hydrolysierte Salze der Carbonsäuren zugänglich mit einem hohen Gehalt an Aluminium. Offenbart ist unter anderem die Herstellung eines polymeren Aluminiumlactat/Wasser Gemisches mit einem Aluminiumgehalt von ca. 10 Gew.-% bei einem Molverhältnis von Aluminium zu Lactat von 2:1. Die Verwendung von elementarem Aluminium zur Darstellung des entsprechenden Carboxylat-Salzes führt dazu, dass der hier vorgeschlagene Syntheseweg als äußerst Energie verzehrend zu beurteilen ist, da dieser notwendigerweise die Herstellung metallischen Aluminiums mit umfasst. Ferner wird die Reaktivität des metallischen Aluminiums durch Legierungszusätze wie Gallium oder Indium erhöht und damit zusätzliche Kontroll- und Verfahrensparameter eingeführt.

Aus der Lehre von DE 4010930 sind hoch konzentrierte Lösungen von Aluminiumtriformiat bekannt. Die Herstellung hoch konzentrierter Salzlösungen gelingt dabei mittels Neutralisationsreaktion der Ameisensäure mit einer Aluminatlauge in wässriger Lösung. Ein erhebliches Problem derartiger Lösung besteht in deren Tendenz auszukristallisieren oder zur hydrolytischen Ausfällung eines Aluminiumhydroxides. Dieser Sachverhalt ist in DE 4010930 offenbart und der Zusatz von Stabilisatoren wird konsequenterweise vorgeschlagen, die in der deutschen Offenlegungsschrift DE 4236530 explizit Gegenstand der Beschreibung sind.

Aluminiumsalze werden standardmäßig wegen ihrer hohen Äquivalentladung bevorzugt als anorganisches Hilfsmittel zur Koagulation in partikulär-dispersen Systemen eingesetzt. Dabei stellt der Prozess der Lackkoagulation ein für die vorliegende Erfindung besonderes relevantes Gebiet dar.
Eine typische Verwendung besteht in der Entklebung / Koagulierung von Lackpartikeln im Umlaufwasser von Lackieranlagen mit Nassauswaschung. Diese Anwendung ist beispielsweise in EP 124 850 näher beschrieben, worauf hier ausdrücklich Bezug genommen wird. Bei der Aufbringung von Lacken, Wachsen oder ähnlichen, nicht-wasserlösliche organische Substanzen enthaltenden Beschichtungsmaterialien z.B. in der Automobilindustrie, gelingt es nicht, die Materialien restlos auf die zu beschichtenden Teile aufzubringen. Speziell bei der Lackierung von Kraftfahrzeugen fällt in den Lackspritzkabinen sog. Overspray an, das mittels eines Wasservorhangs aus den Lackspritzkabinen entfernt und in ein sog. Beruhigungsbecken gespült wird. Dabei sollten die Entklebung der verspritzten und vom Wasser aufgenommenen Lackpartikel und deren Agglomeration zu einem austragungsfähigen Koagulat in einem Arbeitsgang erfolgen. Für dieses Einsatzgebiet ist es bevorzugt, dass die Lösung Kationen 2- oder 3-wertiger Metalle enthält, beispielsweise Magnesium- und/oder Calciumund/oder Aluminiumionen. Der Anteil dieser Kationen an der wässrigen Polymerlösung, wie sie zum Einsatz in der Lackkoagulierung verwendet wird, liegt beispielsweise im Bereich von etwa 1 bis etwa 30 Gew.-%. Diese hochgeladenen positiven Kationen unterstützen den Entklebungs- und Flockungsprozess der Lackpartikel. Die Verwendung von Aluminiumionen ist bevorzugt.
Da die Kationen kontinuierlich mit dem Koagulat aus dem Umlaufwasser entfernt werden, muss das Koagulationsmittel ständig nachdosiert werden. Des Weiteren bedingt dies, dass die mit dem Aluminiumsalz eingebrachten Anionen im Umlaufwasser angereichert werden. Demzufolge werden anwendungstechnisch hochkonzentrierte Aluminiumsalz-Lösungen bevorzugt, die, um korrosive Prozesse an Anlagenteilen des Umlaufbades zu unterbinden, weder Halogenid- (Metallkorrosion), noch Sulfat-Anionen (Betonkorrosion) enthalten. Darüber hinaus, ist aus Gründen der Umweltverträglichkeit und erhöhter Kosten gemäß gesetzlicher Richtlinien bei der Abwasserabgabe auf die Verwendung von Phosphat- und Nitrat-haltigen Salzen zu verzichten.

Die Aufgabe der vorliegenden Erfindung besteht folglich darin, konzentrierte und stabile Aluminiumsalzlösungen zu formulieren, die ohne Zusatz von Stabilisatoren weder auskristallisieren noch hydrolysieren, keine korrosionsfördenden Anionen beinhalten und ausgehend von leicht zugänglichen Rohstoffen in einem einfachen Herstellungsverfahren gut handhabbare und dosierbare Lösungen liefern.

Gegenstand dieser Erfindung ist eine wässrige Lösung eines Aluminiumcarboxylat-Salzes, die mindestens 1,6 Gew.-% Aluminium enthält, dadurch gekennzeichnet, dass als Carboxylat-Anion das Anion einer Hydroxymonocarbonsäure vorliegt und die Lösung pro Mol Aluminium mindestens zwei Äquivalente Hydroxymonocarbonsäure enthält. Dabei können auch mehrere Hydroxymonocarbonsäuren nebeneinander vorliegen.

Die Vorteile des Gegenstandes dieser Erfindung liegen in der außergewöhnlich hohen Stabilität der Lösungen, die nur eine geringe Neigung zur Kristallisation aufweisen und gegenüber Hydrolyse unempfindlich sind. Darüber hinaus ist die Stabilität dieser Aluminiumcarboxylat-Lösung in einem weiten Temperaturbereich gegeben, was die Anbindung bei der Verwendung der Aluminiumcarboxylat-Lösung an bestehende Prozessparameter erleichtert. Eine Lagerung der Aluminiumcarboxylat-Lösungen ist auch ohne Zusatz von Stabilisatoren über einen längeren Zeitraum möglich. Die gemäß der Erfindung vorliegende Aluminiumcarboxylat-Lösung enthält keine schädigenden und/oder korrosiv wirkenden Anionen und ist daher für die Anwendung in technischen Systemen wie Umlaufwässern bei der Lackkoagulierung besonders gut geeignet. Zudem zeichnen sich die erfindungsgemäß verwendeten Carboxylate durch ihre hervorragende biologische Abbaubarkeit in der Wasseraufbereitung industrieller Anlagen aus.

Erfindungsgemäß enthält die wässrige Lösung des Aluminiumcarboxylat-Salzes mindestens 1,6 Gew.-% Aluminium, wobei als Carboxylatanion das Anion einer gesättigten oder ungesättigten Hydroxymonocarbonsäure, die entweder geradkettig oder verzweigt aufgebaut ist, vorliegt.
Hierzu gehören unter anderem die homologen gesättigten Polyhydroxymonoarbonsäuren 2,3-Dihydroxypropionsäure, Erythronsäure, Arabinonsäure und Gluconsäure, wobei generell gilt, dass für die Lösung der erfindungsgemäßen Aufgabe Stereoisomere ein und derselben Verbindung in gleichem Maße bevorzugt werden.

In einer bevorzugten Ausführung liegen als Anionen des Aluminiumcarboxylat-Salzes Anionen von einer oder mehrerer Hydroxymonocarbonsäuren der folgenden allgemeinen Struktur vor, 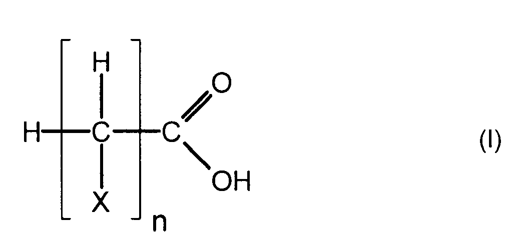 wobei 1 ≤ n ≤ 6 ist und der Substituent X in jeder der n Untereinheiten entweder ein Wasserstoff- oder Hydroxyl-Substituent sein kann, aber insgesamt mindestens eine Untereinheit eine Hydroxylfunktion trägt, so dass Polyhydroxymonocarbonsäuren wie 2,3-Dihydroxypropionsäure, Erythronsäure, Arabinonsäure und Gluconsäure eingeschlossen sind, jedoch α- und β-Hydroxycarbonsäuren wie die homologen geradkettigen 2- bzw. 3-Hydroxyalkansäuren der Buttersäure, Valeriansäure, Capronsäure, Önanthsäure und besonders Milchsäure bevorzugt werden.

Im Rahmen des erfindungsgemäßen Verfahrens zur Herstellung der wässrigen Lösung eines Aluminiumcarboxylat-Salzes wird die in Wasser vorgelegte Hydroxymonocarbonsäure mit einem basischen Aluminiumsalz, vorzugsweise einem Aluminat und besonders bevorzugt Natriumaluminat sukzessive, das heißt portionsweise, umgesetzt. Die Reaktionstemperatur liegt dabei oberhalb von -10°C, insbesondere oberhalb von 0°C und besonders bevorzugt oberhalb von 40°C, wobei die Temperatur 60°C und insbesondere 110°C nicht überschreitet. Die Umsetzung erfolgt dabei derart, dass pro Mol Aluminium mindestens 2 Äquivalente Hydroxymonocarbonsäure vorgelegt werden, bevorzugt jedoch mindestens 2,5, besonders bevorzugt mindestens 3,0 und insbesondere bevorzugt mehr als 3,0 Äquivalente, wobei das Äquivalent mit der chemischen Funktionalität der Carbonsäure-Gruppe gleichzusetzen ist und demnach die Äquivalentzahl einer Hydroxymonocarbonsäure gleich eins ist. Nachfolgend ist exemplarisch die stöchiometrische Neutralisationsreaktion von Milchsäure mit Natriumaluminat wiedergegeben, wobei 4 Äquivalente der Milchsäure verbraucht werden:

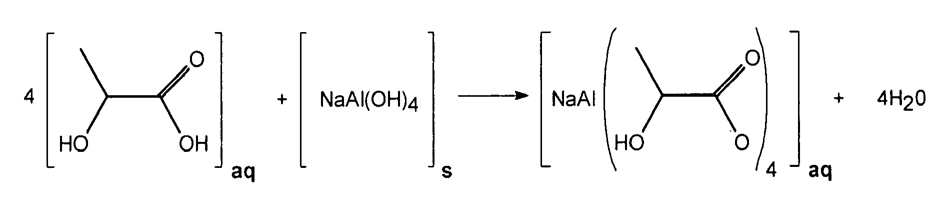

Die erfindungsgemäße Lösung besitzt einen pH-Wert von mindestens 2,5 und bevorzugt mindestens 3, aber nicht größer als 5 und bevorzugt nicht größer als 4. Bei Temperaturen größer als -15°C, zumindest größer als 0°C kristallisiert die Aluminiumcarboxylat-Lösung weder aus noch tritt eine Hydrolyse und damit eine nachfolgende Ausfällung als Aluminiumhydroxid auf. Für den Fall, dass eine Trübung der Aluminumcarboxylat-Lösung vorliegt, so ist diese leicht durch mechanisches Umwälzen der Lösung rückgängig zu machen. Mit diesem Verfahren können Aluminiumgehalte von mindestens 1,6 Gew.-% und bevorzugt mindestens 2,0 Gew.-% und insbesondere bevorzugt mindestens 2,5 Gew.-% realisiert werden.

In einer weiteren Ausführungsform dieser Erfindung enthält die wässrige Aluminiumcarboxylat-Lösung zusätzlich mindestens ein kationisches Polymer. In partikulär-dispersen Systemen wechselwirken diese kationischen Polymere über elektrostatische Anziehungskräfte mit den Partikeln, die vornehmlich eine negative Oberflächenladung aufweisen. Dabei kann es zu einer polymeren Brückenbildung zwischen zwei oder mehreren Partikeln kommen, was einer Vorstufe in der Koagulatbildung entspricht. Im Zusammenwirken mit den hochgeladenen Aluminium-Kationen kann so eine beschleunigte und/oder effektivere Koagulation herbeigeführt werden.
Das kationische Polymer ist erfindungsgemäß vorzugsweise ausgewählt aus der Gruppe der Polyalkylenimine, insbesondere der Polyethlyenimine, Polypropylenimine, Poly(2-Hydroxpropyleniminen) sowie der Amidoamine, und aus Copolymeren, die 1,2-Ethandiamin-Baugruppen enthalten, und enthält durch Protonierung oder Quarternierung kationische Aminogruppen. Aufgrund der anwendungstechnischen Maßgabe dieser Erfindung, mit halogenidarmen Lösungen zu arbeiten, sollen nicht mehr als 10 Mol-% der Gegenionen der kationischen Aminogruppen Halogenidionen darstellen.

Die erfindungsgemäßen Aluminiumcarboxylat-Lösungen mit oder ohne Polymerzusatz eigenen sich zum Imprägnieren von Textilien, als Bestandteil in Desinfektions- und Reinigungsmitteln, als Fixierhilfsmittel in der Lederbearbeitung, als Flockungsmittel in der Wasserbehandlung und insbesondere als Koagulationsmittel für Lacke. Bei der Lackkoagulation in Umlaufwässern aus Spritzkabinen mit Nassauswaschung ist es bevorzugt, dass eine Dosierung der konzentrierten Aluminiumcarboxylat-Lösung mit oder ohne Polymerzusatz von 0,1 bis 20 Gew.-% des Mittels bezogen auf den Gewichtsanteil des Lack-Oversprays erfolgt.

In Tabelle 1 ist am Beispiel verschiedener Carbonsäuren die Herstellung der entsprechenden ungetrübten, klaren Aluminiumcarboxylat-Lösungen mit einem Aluminiumanteil von 2,5 Gew.-% und deren Stabilität angegeben. Die in der Tabelle angegebene Durchführbarkeit bezieht sich dabei auf das Vorliegen einer bei Raumtemperatur ungetrübten Carboxylat-Lösung mit dem gewünschten Aluminiumanteil unmittelbar nach der stöchiometrischen Reaktionsführung oder unmittelbar nach einem weiteren Erwärmen über die Reaktionstemperatur von 60 °C hinaus bei gleichzeitigem mechanischen Umwälzen einer anfänglich getrübten Reaktionslösung.
Die sukzessive stöchiometrische Umsetzung der Dicarbonsäuren Oxalsäure und Weinsäure mit Natriumaluminat liefert dabei getrübte Lösungen mit einem kristallinen Sediment, welches auch bei weiterem Erwärmen über die Reaktionstemperatur von 60 °C hinaus nicht in Lösung geht.

| Tabelle 1: | | |
|---|---|---|
| Durchführbarkeit der stöchiometrischen Umsetzung der entsprechenden Carbonsäure mit NaAlO₂ und Stabilität von wässrigen Aluminiumcarboxylat-Lösungen mit einem Aluminiumanteil von 2,5 Gew.-%. | | |
| Carbonsäure | Durchführbarkeit | Stabilität |
| Ameisensäure | ja | o |
| Essigsäure | ja | _ |
| Oxalsäure | nein | % |
| Weinsäure | nein | % |
| Milchsäure | ja | + |
| o neutral / + gut / - kaum / % nicht bewertbar | | |

Die Kristallisationsneigung der Aluminiumcarboxylat-Lösungen der Monocarbonsäuren Ameisensäure und Essigsäure mit einem Aluminiumanteil von 2,5 Gew.-% ist weitaus geringer ausgeprägt. Die Aluminiumformiat-Lösung ist unmittelbar nach der Herstellung klar und wird erst bei Abkühlung auf ungefähr 0 °C oder über einen längeren Zeitraum von mehreren Wochen instabil und bildet einen feinkristallinen Niederschlag, der durch Erwärmen und mechanischen Umwälzen der Lösung nicht vollständig wieder in Lösung gebracht werden kann (siehe Tabelle 2). Eine entsprechende Aluminiumacetat-Lösung mit einem Aluminiumanteil von 2,5 Gew.-% kann hergestellt werden, da sich die unmittelbar nach der Umsetzung vorliegende leicht getrübte Lösung mit einem geringen gelartigen Niederschlag durch Erwärmen und mechanisches Umwälzen in eine klare Lösung umwandeln lässt. Allerdings ist die Stabilität einer solchen Aluminiumacetat-Lösung bei Raumtemperatur nur für wenige Stunden gegeben. Im Gegensatz dazu ist eine entsprechende klare Aluminiumlactat-Lösung mit einem Aluminiumanteil von 2,5 Gew.-% unmittelbar herstellbar und bei Raumtemperatur über einen langen Zeitraum stabil.

In Tabelle 2 sind die Eigenschaftsprofile von Aluminiumformiat- und Aluminiumlactat-Lösungen bezüglich ihres Anwendungspotentials bei der Lackkoagulation gegenübergestellt. Die Lagerstabilität der konzentrierten Lösungen, welche anhand des Auftretens einer Trübung und/oder eines Sediments beurteilt wird, liegt für die Formiat-Lösung im Bereich mehrerer Wochen bis zu 3 Monaten, während die Aluminiumlactat-Lösung üblicherweise über 7 Monate hinaus keine Trübung aufweist und stabil bleibt. Darüberhinaus kann eine Lactat-Lösung bei Temperaturen bis zu -15 °C gelagert werden, ohne dass eine Kristallisation erfolgt. Bei tieferen Temperaturen gefriert die Lactat-Lösung im Gegensatz zur Formiat-Lösung reversibel, d.h. eine klare Lösung ist durch Temperaturerhöhung und mechanisches Umwälzen wieder zugänglich.
In der Lackkoagulierung zeigt sich, dass Aluminiumlactat wesentlich effektiver in der Flockenbildung ist und eine bessere Klärung im Umlaufwasser erzielt als Aluminiumformiat. Dieser Effekt und das Maß der Trübung kann mit Standardmethoden der Turbidimetrie und/oder Nephelometrie quantitativ erfasst werden.

| Tabelle 2: | | |
|---|---|---|
| Eigenschaftsprofile von Aluminiumformiat- und Aluminiumlactat-Lösungen für industrielle Anwendungen in der Wasserbehandlung und speziell bei der Lackkoagulation. | | |
| | Aluminiumformiat | Aluminiumlactat |
| Lagerstabilität der konzentrierten wässrigen Lösung bei 20°C | < 3 Monate | > 7 Monate |
| Kältestabilität / °C | > 0 | > -15 |
| Klärung bei gleicher Dosierung | Formiat << Lactat | |
| Geruch | stechend | neutral |

## Patentansprüche

1. Verfahren zur Lackkoagulation in Umlaufwässern aus Spritzkabinen mit Naßauswaschung durch Zugabe eines wässrigen Mittels enthaltend gelöste Aluminiumcarboxylat-Salze, **dadurch gekennzeichnet, dass** eine Dosierung von 0,1 bis 20 Gew.-% des wässrigen Mittels bezogen auf den Gewichtsanteil des Lack-Oversprays erfolgt, wobei der Gewichtsanteil an Aluminium im wässrigen Mittel mindestens 1,6 Gew.-% beträgt, als Carboxylat-Anion das Anion einer Hydroxymonocarbonsäure vorliegt und pro Mol Aluminium mindestens zwei Äquivalente Hydroxymonocarbonsäure enthalten sind.

2. Verfahren gemäß Anspruch 1, **dadurch gekennzeichnet, dass** das wässrige Mittel mindestens 2,0 Gew.-% und bevorzugt mindestens 2,5 Gew.-% Aluminium enthält.

3. Verfahren nach einem oder beiden der vorherigen Ansprüche, **dadurch gekennzeichnet, dass** das wässrige Mittel einen pH-Wert von mindestens 2,5 und bevorzugt mindestens 3, aber nicht größer als 5 und bevorzugt nicht größer als 4 aufweist.

4. Verfahren nach einem oder mehreren der vorherigen Ansprüche, **dadurch gekennzeichnet, dass** das wässrige Mittel als Carboxylat-Anionen Anionen von einer oder mehreren Hydroxymonocarbonsäuren der folgenden allgemeinen Struktur (I) enthält, 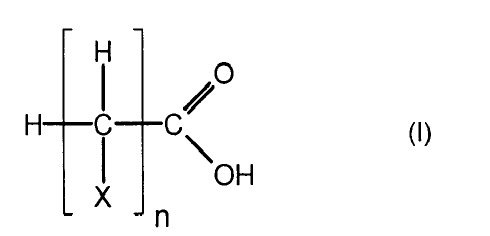 wobei 1≤n≤6 ist und der Substituent X in jeder der n Untereinheiten entweder ein Wasserstoff- oder Hydroxyl-Substituent sein kann, aber insgesamt mindestens eine Untereinheit eine Hydroxylfunktion trägt, wobei α- und β-Hydroxymonocarbonsäuren und besonders Milchsäure bevorzugt werden.

5. Verfahren nach einem oder mehreren der vorherigen Ansprüche, **dadurch gekennzeichnet, dass** das wässrige Mittel zusätzlich mindestens ein kationisches Polymer enthält.

6. Verfahren nach Anspruch 5, **dadurch gekennzeichnet, dass** das kationische Polymer durch Protonierung oder Quarternierung kationische Aminogruppen aufweist und vorzugsweise ausgewählt ist aus der Gruppe der Polyalkylenimine, insbesondere der Polyethylenimine, Polypropylenimine, Poly(2-Hydroxypropyleniminen) sowie der Amidoamine, und aus Copolymeren, die 1,2-Ethandiamin-Baugruppen enthalten.

7. Verfahren nach einem oder beiden der Ansprüche 5 und 6, **dadurch gekennzeichnet, dass** nicht mehr als 10 Mol-% der Gegenionen der kationischen Aminogruppen Halogenidionen darstellen.

8. Verwendung einer wässrigen Lösung eines Aluminiumcarboxylat-Salzes, die mindestens 1,6 Gew.-% Aluminium enthält, wobei als Carboxylat-Anion das Anion einer Hydroxymonocarbonsäure vorliegt und die Lösung pro Mol Aluminium mindestens zwei Äquivalente Hydroxymonocarbonsäure enthält, zur Lackkoagulation in Umlaufwässern aus Spritzkabinen mit Naßauswaschung, **dadurch gekennzeichnet, dass** eine Dosierung von 0,1 bis 20 Gew.-% des Mittels bezogen auf den Gewichtsanteil des Lack-Oversprays erfolgt.
